# EUROPEAN PATENT APPLICATION

(11) **EP 4 694 292 A1**
(43) Date of publication of application: **11.02.2026**
(21) Application number: 24784058.0
(22) Date of filing: 18.03.2024
(51) Int. Cl.: H04W 24/08

(54) **COMMUNICATION METHOD AND APPARATUS**

(30) Priority: 07.04.2023 CN 202310371195
(71) Applicant: Datang Mobile Communications Equipment Co., Ltd., Beijing 100085 (CN)
(72) Inventor: FANG, Rongyi, Beijing 100085 (CN); LI, Hui, Beijing 100085 (CN); REN, Bin, Beijing 100085 (CN); REN, Xiaotao, Beijing 100085 (CN); DA, Ren, Beijing 100085 (CN)
(74) Representative: Studio Torta S.p.A.
(86) International application number: PCT/CN2024/082310
(87) International publication number: WO 2024/207973

(57) **Abstract**

The present disclosure provides a communication method and apparatus, including: receiving, by a first device, a first resource sent by a second device; performing measurement on the first resource to obtain a measurement value; sending the measurement value and related information of a first reference point corresponding to the measurement value to the second device or a third device. That is, when sending the measurement value to the second device or the third device, the first device concurrently sends the related information of the first reference point to the second device or the third device. The present disclosure can improve the accuracy and robustness of positioning.

## Description

The present disclosure claims priority to Chinese patent application No. 202310371195.X, filed to China National Intellectual Property Administration on April 7, 2023, and entitled "COMMUNICATION METHOD AND APPARATUS", which is hereby incorporated by reference in its entirety.

### TECHNICAL FIELD

The present disclosure relates to the field of communication technologies and, in particular, to a communication method and apparatus.

### BACKGROUND

Vehicles have larger space and can be equipped with more antenna panels, thereby providing more measurement information and being beneficial to achieving higher positioning accuracy.

However, at present, there is still a lack of corresponding solutions for communication in multi-antenna-panel scenarios related to the sidelink, etc.

### SUMMARY

The present disclosure provides a communication method and apparatus for solving the communication in multi-antenna-panel scenarios.

In a first aspect, the present disclosure provides a communication method, where the method is applied to a first device, and the method includes:
receiving a first resource sent by a second device;
performing measurement on the first resource to obtain a measurement value;
sending the measurement value and related information of a first reference point corresponding to the measurement value to the second device or a third device.

The embodiment proposes a communication method in a multi-antenna-panel scenario, and by also sending the related information of the first reference point corresponding to the measurement value, the effectiveness and reliability of positioning can be achieved.

In some embodiments, the related information of the first reference point includes first position information and/or first identification information of the first reference point.

In the embodiments, the related information of the first reference point may be represented from a dimension of position information, and the related information of the first reference point may also be represented from a dimension of identification information, thereby improving the richness of the related information of the first reference point.

In some embodiments, the first position information is first absolute position information or first relative position information.

In some embodiments, the first reference point includes at least one of a reference point RP of the first device, an antenna panel center of the first device, an antenna reference point ARP of the first device, or an antenna phase center APC of the first device.

In the embodiments, the first reference point may include points in multiple dimensions, so that the diversity of the first reference point can be achieved. Moreover, the first reference point includes both coarse-grained points and fine-grained points, so that the comprehensiveness of the first reference point can be achieved.

In some embodiments, the first relative position information is position information of the first reference point relative to a second reference point of the first device;
where the second reference point includes one of the following: a datum point on the first device, a first reference point RP of the first device, a reference antenna panel center of the first device, a first antenna reference point ARP of the first device, or a reference antenna phase center APC of the first device;
where the datum point is any point on the first device.

Similarly, in the embodiments, the second reference point has diversity and comprehensiveness.

In some embodiments, the method further includes:
receiving positioning assistance information sent by the third device, where the positioning assistance information is used to determine the measurement value.

In the embodiments, by determining the measurement value in conjunction with the positioning assistance information, the accuracy and reliability of the measurement value can be improved.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In the embodiments, the positioning assistance information may include content in in an angle dimension, and may also include content in a time dimension, thereby improving the diversity of the positioning assistance information.

In some embodiments, the measurement value is a differential measurement value or an absolute measurement value.

In the embodiments, the measurement value may be determined from an absolute dimension, and the measurement value may also be determined from a differential dimension, so that the measurement value can have diversity.

In some embodiments, the differential measurement value is determined based on one of the following differential forms:
a differential form on different first reference points for a same first resource; or
a differential form on different first resources for a same first reference point.

In the embodiments, the differential forms are various, and the flexibility in differencing of the measurement value can be achieved.

In some embodiments, the measurement value includes an angle measurement value, and the angle measurement value is a measurement value in a global coordinate system or a measurement value in a local coordinate system.

In the embodiments, the measurement value can be represented by different coordinate systems, thereby improving the diversity of the measurement value.

In some embodiments, the method further includes:
receiving related information of a third reference point corresponding to the first resource that is sent by the second device;
sending the related information of the third reference point to the third device.

In the embodiments, by receiving and forwarding the related information of the third reference point, the positioning by the third device can be facilitated.

In some embodiments, the method further includes one of the following:
receiving a positioning result fed back by the second device; or
receiving a positioning result fed back by the third device.

In some embodiments, the method further includes:
sending obtained information of a Uu interface to the third device or the second device.

In the embodiments, the information of the Uu interface is sent, so that positioning is performed in combination with the information of the Uu interface, thereby improving the accuracy of positioning.

In some embodiments, a quantity of the first resource is more than one; and first resources include one of the following:
the first resources include different resources of one second device; or
the first resources include resources of multiple second devices.

In a second aspect, the present disclosure provides a communication method, where the method is applied to a first device, and the method includes:
receiving a first resource and related information of a third reference point corresponding to the first resource that are sent by a second device.

In some embodiments, the method further includes:
determining a positioning result according to the first resource and the related information of the third reference point.

In some embodiments, determining the positioning result according to the first resource and the related information of the third reference point includes at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface and the related information of the first reference point corresponding to the measurement value.

In some embodiments, the method further includes one of the following:
performing measurement on the first resource to obtain a measurement value, and sending the measurement value and the related information of the third reference point to a third device; or
performing measurement on the first resource to obtain the measurement value, and sending the measurement value, related information of a first reference point corresponding to the measurement value, and the related information of the third reference point to the third device.

In some embodiments, the method further includes at least one of the following:
sending information of a Uu interface to the third device; or
sending the related information of the first reference point corresponding to the measurement value to the third device.

In some embodiments, the method further includes:
receiving a positioning result fed back by the third device.

In a third aspect, the present disclosure provides a communication method, where the method is applied to a second device, and the method includes:
sending a first resource and related information of a third reference point corresponding to the first resource.

In some embodiments, the third reference point includes at least one of a reference point RP of the second device, an antenna panel center of the second device, an antenna reference point ARP of the second device, or an antenna phase center APC of the second device.

In some embodiments, the related information of the third reference point includes second position information and/or second identification information of the third reference point, and the second position information is second absolute position information or second relative position information.

In some embodiments, the second relative position information is position information of the third reference point relative to a fourth reference point of the second device;
where the fourth reference point includes one of the following: a datum point on the second device, a second reference point RP of the second device, a reference antenna panel center of the second device, a second antenna reference point ARP of the second device, or a reference antenna phase center APC of the second device;
where the datum point is any point on the second device.

In some embodiments, sending the first resource and the related information of the third reference point corresponding to the first resource includes one of the following:
sending the first resource and the related information of the third reference point to a first device; or
sending the first resource to the first device and sending the related information of the third reference point to a third device.

In some embodiments, the method further includes:
receiving a positioning result.

In a fourth aspect, the present disclosure provides a communication method, including:
receiving a measurement value and related information of a first reference point corresponding to the measurement value that are sent by a first device;
determining a positioning result according to the measurement value and the related information of the first reference point.

In some embodiments, the method further includes:
receiving information of a Uu interface sent by the first device;
where determining the positioning result according to the measurement value and the related information of the first reference point includes: determining the positioning result according to the measurement value, the related information of the first reference point, and the information of the Uu interface.

In some embodiments, determining the positioning result according to the measurement value and the related information of the first reference point includes:
determining the positioning result according to the measurement value, the related information of the first reference point, and related information of a third reference point corresponding to a first resource used to determine the measurement value.

In some embodiments, the method further includes:
sending the positioning result to the first device.

In some embodiments, the method is applied to a third device, and the method further includes:
receiving related information of a third reference point corresponding to a first resource used to determine the measurement value, where the related information of the third reference point is sent by the first device or a second device;
where determining the positioning result according to the measurement value and the related information of the first reference point includes: determining the positioning result according to the measurement value, the related information of the first reference point, and the related information of the third reference point.

In some embodiments, the method further includes at least one of the following:
sending the positioning result to the first device; or
send the positioning result to the second device.

In some embodiments, the method further includes:
sending positioning assistance information to the first device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In a fifth aspect, the present disclosure provides a first device, including a memory, a transceiver and a processor;
the memory is configured to store a computer program; the transceiver is configured to transmit and receive data under control of the processor; the processor is configured to read the computer program in the memory and perform the following operations:
receiving a first resource sent by a second device;
performing measurement on the first resource to obtain a measurement value;
sending the measurement value and related information of a first reference point corresponding to the measurement value to the second device or a third device.

In some embodiments, the related information of the first reference point includes first position information and/or first identification information of the first reference point.

In some embodiments, the first position information is first absolute position information or first relative position information.

In some embodiments, the first reference point includes at least one of a reference point RP of the first device, an antenna panel center of the first device, an antenna reference point ARP of the first device, or an antenna phase center APC of the first device.

In some embodiments, the first relative position information is position information of the first reference point relative to a second reference point of the first device;
where the second reference point includes one of the following: a datum point on the first device, a first reference point RP of the first device, a reference antenna panel center of the first device, a first antenna reference point ARP of the first device, or a reference antenna phase center APC of the first device;
where the datum point is any point on the first device.

In some embodiments, the processor is further configured to perform the following operation:
receiving positioning assistance information sent by the third device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In some embodiments, the measurement value is a differential measurement value or an absolute measurement value.

In some embodiments, the differential measurement value is determined based on one of the following differential forms:
a differential form on different first reference points for a same first resource; or
a differential form on different first resources for a same first reference point.

In some embodiments, the measurement value includes an angle measurement value, and the angle measurement value is a measurement value in a global coordinate system or a measurement value in a local coordinate system.

In some embodiments, the processor is further configured to perform the following operations:
receiving related information of a third reference point corresponding to the first resource that is sent by the second device;
sending the related information of the third reference point to the third device.

In some embodiments, the processor is further configured to perform the following operations:
receiving a positioning result fed back by the second device;
receiving a positioning result fed back by the third device.

In some embodiments, the processor is further configured to perform the following operation:
sending obtained information of a Uu interface to the third device or the second device.

In some embodiments, a quantity of the first resource is more than one; first resources include one of the following:
the first resources include different resources of one second device; or
the first resources include resources of multiple second devices.

In a sixth aspect, the present disclosure provides a first device, including a memory, a transceiver and a processor;
the memory is configured to store a computer program; the transceiver is configured to transmit and receive data under control of the processor; the processor is configured to read the computer program in the memory and perform the following operation:
receiving a first resource and related information of a third reference point corresponding to the first resource that are sent by a second device.

In some embodiments, the processor is further configured to perform the following operation:
determining a positioning result according to the first resource and the related information of the third reference point.

In some embodiments, determining, by the processor, the positioning result according to the first resource and the related information of the third reference point specifically includes at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface, and the related information of the first reference point corresponding to the measurement value.

In some embodiments, the processor is further configured to perform the following operations:
performing measurement on the first resource to obtain a measurement value, and sending the measurement value and the related information of the third reference point to a third device;
performing measurement on the first resource to obtain the measurement value, and sending the measurement value, related information of a first reference point corresponding to the measurement value, and the related information of the third reference point to the third device.

In some embodiments, the processor is further configured to perform the following operations:
sending information of a Uu interface to the third device;
sending the related information of the first reference point corresponding to the measurement value to the third device.

In some embodiments, the processor is further configured to perform the following operation:
receiving a positioning result fed back by the third device.

In a seventh aspect, the present disclosure provides a second device including a memory, a transceiver and a processor;
the memory is configured to store a computer program; the transceiver is configured to transmit and receive data under control of the processor; the processor is configured to read the computer program in the memory and perform the following operation:
sending a first resource and related information of a third reference point corresponding to the first resource.

In some embodiments, the third reference point includes at least one of a reference point RP of the second device, an antenna panel center of the second device, an antenna reference point ARP of the second device, or an antenna phase center APC of the second device.

In some embodiments, the related information of the third reference point includes second position information and/or second identification information of the third reference point, and the second position information is second absolute position information or second relative position information.

In some embodiments, the second relative position information is position information of the third reference point relative to a fourth reference point of the second device;
where the fourth reference point includes one of the following: a datum point on the second device, a second reference point RP of the second device, a reference antenna panel center of the second device, a second antenna reference point ARP of the second device, or a reference antenna phase center APC of the second device;
where the datum point is any point on the second device.

In some embodiments, sending, by the processor, the first resource and the related information of the third reference point corresponding to the first resource specifically includes one of the following:
sending the first resource and the related information of the third reference point to a first device; or
sending the first resource to the first device and sending the related information of the third reference point to a third device.

In some embodiments, the processor is further configured to perform the following operation:
receiving a positioning result.

In an eighth aspect, the present disclosure provides a communication apparatus, including a memory, a transceiver and a processor;
the memory is configured to store a computer program; the transceiver is configured to transmit and receive data under control of the processor; the processor is configured to read the computer program in the memory and perform the following operations:
receiving a measurement value and related information of a first reference point corresponding to the measurement value that are sent by a first device;
determining a positioning result according to the measurement value and the related information of the first reference point.

In some embodiments, the processor is further configured to perform the following operation:
receiving information of a Uu interface sent by the first device;
where determining the positioning result according to the measurement value and the related information of the first reference point includes: determining the positioning result according to the measurement value, the related information of the first reference point, and the information of the Uu interface.

In some embodiments, determining, by the processor, the positioning result according to the measurement value and the related information of the first reference point specifically includes:
determining the positioning result according to the measurement value, the related information of the first reference point, and related information of a third reference point corresponding to a first resource used to determine the measurement value.

In some embodiments, the processor is further configured to perform the following operation:
sending the positioning result to the first device.

In some embodiments, the method is applied to a third device, and the processor is further configured to perform the following operation:
receiving related information of a third reference point corresponding to a first resource used to determine the measurement value, where the related information of the third reference point is sent by the first device or a second device;
where determining the positioning result according to the measurement value and the related information of the first reference point includes: determining the positioning result according to the measurement value, the related information of the first reference point, and the related information of the third reference point.

In some embodiments, the processor is further configured to perform the following operations:
sending the positioning result to the first device;
sending the positioning result to the second device.

In some embodiments, the processor is further configured to perform the following operation:
sending positioning assistance information to the first device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In a ninth aspect, the present disclosure provides a communication apparatus, where the apparatus is applied to a first device, and the apparatus includes:
a receiving unit, configured to receive a first resource sent by a second device;
a measurement unit, configured to perform measurement on the first resource to obtain a measurement value;
a sending unit, configured to send the measurement value and related information of a first reference point corresponding to the measurement value to the second device or a third device.

In some embodiments, the related information of the first reference point includes first position information and/or first identification information of the first reference point.

In some embodiments, the first position information is first absolute position information or first relative position information.

In some embodiments, the first reference point includes at least one of a reference point RP of the first device, an antenna panel center of the first device, an antenna reference point ARP of the first device, or an antenna phase center APC of the first device.

In some embodiments, the first relative position information is position information of the first reference point relative to a second reference point of the first device;
where the second reference point includes one of the following: a datum point on the first device, a first reference point RP of the first device, a reference antenna panel center of the first device, a first antenna reference point ARP of the first device, or a reference antenna phase center APC of the first device;
where the datum point is any point on the first device.

In some embodiments, the receiving unit is further configured to receive positioning assistance information sent by the third device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In some embodiments, the measurement value is a differential measurement value or an absolute measurement value.

In some embodiments, the differential measurement value is determined based on one of the following differential forms:
a differential form on different first reference points for a same first resource; or
a differential form on different first resources for a same first reference point.

In some embodiments, the measurement value includes an angle measurement value, and the angle measurement value is a measurement value in a global coordinate system or a measurement value in a local coordinate system.

In some embodiments, the receiving unit is further configured to receive related information of a third reference point corresponding to the first resource that is sent by the second device;
the sending unit is further configured to send the related information of the third reference point to the third device.

In some embodiments, the receiving unit is further configured to perform one of the following:
receiving a positioning result fed back by the second device; or
receiving a positioning result fed back by the third device.

In some embodiments, the sending unit is further configured to send obtained information of a Uu interface to the third device or the second device.

In some embodiments, a quantity of the first resource is more than one; first resources include one of the following:
the first resources include different resources of one second device; or
the first resources include resources of multiple second devices.

In a tenth aspect, the present disclosure provides a communication apparatus, where the apparatus is applied to a first device, and the apparatus includes:
a receiving unit, configured to receive a first resource and related information of a third reference point corresponding to the first resource that are sent by a second device.

In some embodiments, the apparatus further includes:
a determination unit, configured to determine a positioning result according to the first resource and the related information of the third reference point.

In some embodiments, the determination unit is configured to perform at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface, and the related information of the first reference point corresponding to the measurement value.

In some embodiments, the apparatus further includes a processing unit, and the processing unit is configured to perform one of the following:
performing measurement on the first resource to obtain a measurement value, and sending the measurement value and the related information of the third reference point to a third device; or
performing measurement on the first resource to obtain the measurement value, and sending the measurement value, related information of a first reference point corresponding to the measurement value, and the related information of the third reference point to the third device.

In some embodiments, the apparatus further includes a sending unit, and the sending unit is configured to perform at least one of the following:
sending information of a Uu interface to the third device; or
sending the related information of the first reference point corresponding to the measurement value to the third device.

In some embodiments, the receiving unit is further configured to receive a positioning result fed back by the third device.

In an eleventh aspect, the present disclosure provides a communication apparatus, where the apparatus is applied to a second device, and the apparatus includes:
a sending unit, configured to send a first resource and related information of a third reference point corresponding to the first resource.

In some embodiments, the third reference point includes at least one of a reference point RP of the second device, an antenna panel center of the second device, an antenna reference point ARP of the second device, or an antenna phase center APC of the second device.

In some embodiments, the related information of the third reference point includes second position information and/or second identification information of the third reference point, and the second position information is second absolute position information or second relative position information.

In some embodiments, the second relative position information is position information of the third reference point relative to a fourth reference point of the second device;
where the fourth reference point includes one of the following: a datum point on the second device, a second reference point RP of the second device, a reference antenna panel center of the second device, a second antenna reference point ARP of the second device, or a reference antenna phase center APC of the second device;
where the datum point is any point on the second device.

In some embodiments, the sending unit is configured to perform one of the following:
sending the first resource and the related information of the third reference point to a first device; or
sending the first resource to the first device and sending the related information of the third reference point to a third device.

In some embodiments, the apparatus further includes a receiving unit, and the receiving unit is configured to receive a positioning result.

In a twelfth aspect, the present disclosure provides a communication apparatus, including:
a receiving unit, configured to receive a measurement value and related information of a first reference point corresponding to the measurement value that are sent by a first device;
a determination unit, configured to determine a positioning result according to the measurement value and the related information of the first reference point.

In some embodiments, the receiving unit is further configured to receive information of a Uu interface sent by the first device;
where determining the positioning result according to the measurement value and the related information of the first reference point includes: determining the positioning result according to the measurement value, the related information of the first reference point, and the information of the Uu interface.

In some embodiments, the determination unit is configured to determine the positioning result according to the measurement value, the related information of the first reference point, and related information of a third reference point corresponding to a first resource used to determine the measurement value.

In some embodiments, the apparatus further includes a sending unit, and the sending unit is configured to send the positioning result to the first device.

In some embodiments, the apparatus is applied to a third device, and the receiving unit is further configured to receive related information of a third reference point corresponding to a first resource used to determine the measurement value, where the related information of the third reference point is sent by the first device or a second device;
the determination unit is specifically configured to determine the positioning result according to the measurement value, the related information of the first reference point, and the related information of the third reference point.

In some embodiments, the sending unit is further configured to: send the positioning result to the first device;
send the positioning result to the second device.

In some embodiments, the sending unit is further configured to send positioning assistance information to the first device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In a thirteenth aspect, the present disclosure provides a processor-readable storage medium, where the processor-readable storage medium stores a computer program, and the computer program is used to cause the processor to perform the method according to the first aspect, the second aspect, the third aspect and/or the fourth aspect.

In a fourteenth aspect, the present disclosure provides a computer program product, including a computer program, and when the computer program is executed by a processor, the method according to the first aspect, the second aspect, the third aspect and/or the fourth aspect is implemented.

In a fifteenth aspect, the present disclosure provides an electronic device, including: a processor and a memory communicatively connected to the processor;
the memory stores computer execution instructions;
the processor executes the computer execution instructions stored in the memory to implement the method according to any one of claims 1 to 14; or, to implement the method according to the first aspect, the second aspect, the third aspect and/or the fourth aspect.

### BRIEF DESCRIPTION OF THE DRAWINGS

The accompanying drawings herein, which are incorporated into the specification and form a part of the specification, illustrate embodiments in accordance with the present disclosure and together with the specification, serve to explain principles of the present disclosure.
FIG. 1 is a schematic diagram of a communication method according to an embodiment of the present disclosure.
FIG. 2 is a scenario where a communication method of the present disclosure may be applicable.
FIG. 3 is a scenario where a communication method of the present disclosure may be applicable.
FIG. 4 is a scenario where a communication method of the present disclosure may be applicable.
FIG. 5 is a scenario where a communication method of the present disclosure may be applicable.
FIG. 6 is a schematic diagram of a communication method according to another embodiment of the present disclosure.
FIG. 7 is a schematic diagram of a reference point according to an embodiment of the present disclosure.
FIG. 8 is a schematic diagram of differencing of a measurement value of the present disclosure.
FIG. 9 is a schematic diagram of differencing of a measurement value of the present disclosure.
FIG. 10 is schematic diagram of differencing of a measurement value of the present disclosure.
FIG. 11 is schematic diagram of differencing of a measurement value of the present disclosure.
FIG. 12 is schematic diagram of differencing of a measurement value of the present disclosure.
FIG. 13 is a schematic diagram of a communication method according to another embodiment of the present disclosure.
FIG. 14 is a schematic diagram of a first device according to an embodiment of the present disclosure.
FIG. 15 is a schematic diagram of a first device according to another embodiment of the present disclosure.
FIG. 16 is a schematic diagram of a first device according to an embodiment of the present disclosure.
FIG. 17 is a schematic diagram of a communication apparatus according to an embodiment of the present disclosure.
FIG. 18 is a schematic diagram of a communication apparatus according to another embodiment of the present disclosure.
FIG. 19 is a schematic diagram of a communication apparatus according to another embodiment of the present disclosure.
FIG. 20 is a schematic diagram of a communication apparatus according to another embodiment of the present disclosure.
FIG. 21 is a schematic diagram of a communication apparatus according to another embodiment of the present disclosure.

Explicit embodiments of the present disclosure are shown through the above drawings, and will be described in more detail hereafter. These drawings and textual descriptions are not intended to limit the scope of the concepts of the present disclosure in any way, but rather to illustrate the concepts of the present disclosure for those skilled in the art by referring to specific embodiments.

### DESCRIPTION OF EMBODIMENTS

Here, exemplary embodiments will be described in detail, with examples shown in the accompanying drawings. When referring to the accompanying drawings, unless otherwise indicated, the same numbers in different drawings represent the same or similar elements. The implementations described in the following exemplary embodiments do not represent all implementations consistent with the present disclosure. On the contrary, they are only examples of apparatuses and methods consistent with some aspects of the present disclosure as described in the accompanying claims.

In the embodiments of the present disclosure, the term "and/or" describes an association relationship of associated objects, and means that there may be three types of relationships. For example, A and/or B may represent three situations, namely, A exists alone, A and B exist at the same time, and B exists alone. The character "/" generally means that the associated objects before and after the character are of an "or" relationship.

In the embodiments of the present disclosure, the term "multiple" refers to two or more, and other quantifiers are similar.

The technical solutions in the embodiments of the present disclosure will be described clearly and comprehensively in combination with accompanying drawings in the embodiments of the present disclosure. Obviously, the described embodiments are only part of the embodiments of the present disclosure, not all of them. All other embodiments obtained by those ordinarily skilled in the art based on the embodiments of the present disclosure without creative efforts fall within the protection scope of the present disclosure.

Internet of Vehicles positioning can provide location services among vehicles, which greatly ensures safety among vehicles. Compared to cellular positioning, vehicles have larger space and can be equipped with more antenna panels (panels), thereby providing more measurement information and being beneficial to achieve higher positioning accuracy. At the same time, for relative positioning between vehicles, knowing the position alone is not enough, and the attitude or orientation of the vehicle is also necessary for vehicle safety. A multi-antenna-panel (multi-panel) can be used to assist in determining the attitude or orientation of the vehicle.

However, at present, there is still a lack of corresponding solutions for multi-antenna-panel measurement and reporting related to the sidelink (sidelink, SL).

Therefore, the present disclosure provides an inventive technical concept: while reporting a measurement value, related information of a reference point corresponding to the measurement value is reported; or, when sending a first resource (used for determining a measurement value), related information of a reference point corresponding to the first resource is sent concurrently. That is, the technical concept of the present disclosure is to add the related information of the reference point during a process of sending information.

Based on the above technical concept, the present disclosure proposes a communication method.

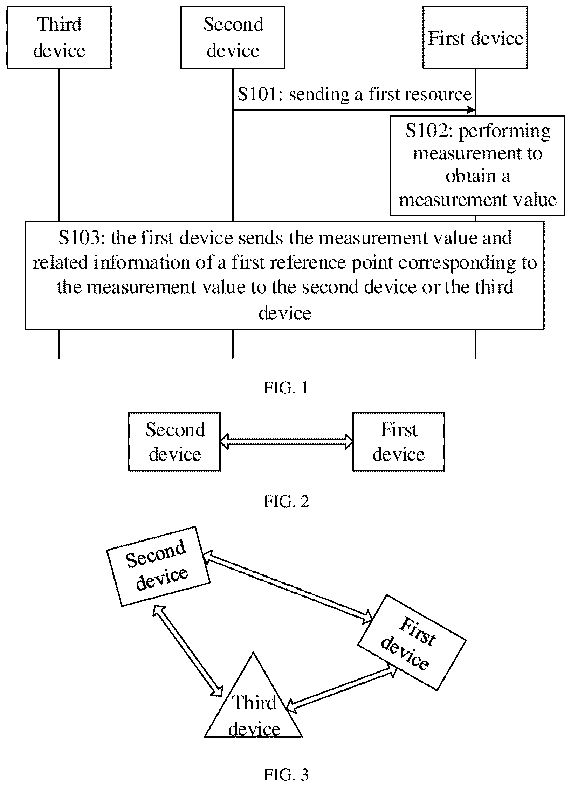

Referring to FIG. 1, FIG. 1 is a schematic diagram of a communication method according to an embodiment of the present disclosure. As shown in FIG. 1, the method includes the following steps.

S101: a second device sends a first resource to a first device.

Correspondingly, the first device receives the first resource sent by the second device.

Exemplarily, the first device is a receiving device, and the second device is a sending device. The first resource includes: a (Sidelink, SL) - positioning reference signal (Positioning Reference Signal, PRS), an uplink (Uplink, UL) - channel sounding reference signal (Sounding Reference Signal, SRS), a downlink (Downlink, DL) - PRS, and so on.

S102: the first device performs measurement on the first resource to obtain a measurement value.

S103: the first device sends the measurement value and related information of a first reference point corresponding to the measurement value to the second device or a third device.

The measurement value and the related information of the first reference point are used for position calculation to obtain a positioning result. The third device may be a location management function (Location Management Function, LMF), or may be a server user equipment (server UE), or may be a road side unit (Road Side Unit, RSU), or may be a base station (Base Station, BS), etc., which will not be enumerated here.

The first reference point is a corresponding receiving reference point in the first device for determining the measurement value, and this embodiment does not limit information related to the quantity and position of the first reference point. The related information of the first reference point refers to information related to the first reference point.

In this embodiment, when sending the measurement value to the second device or the third device, the first device concurrently sends the related information of the first reference point to the second device or the third device, so as to improve the accuracy and robustness of SL positioning, and the attitude of the vehicle can be determined.

It should be understood that, in some other scenarios, the first device may serve as the second device and perform related operations of the second device as described in the above embodiment. Similarly, in some other scenarios, the second device may serve as the first device and perform related operations of the first device as described in the above embodiment.

Scenarios that the communication method of the present disclosure may be applicable can be found in FIG. 2 to FIG. 5.

As shown in FIG. 2, the communication method of the present disclosure may be applied to a scenario including a first device and a second device. In FIG. 2, one first device and one second device are exemplarily shown. It should be understood that, this is only exemplary here, and in some other embodiments, the quantity of the first device and/or the second device may be greater than this. Other quantities of the first device and/or the second device known to those skilled in the art may also be applied here.

As shown in FIG. 3 to FIG. 5, the communication method of the present disclosure may be applied to scenarios including a first device, a second device and a third device.

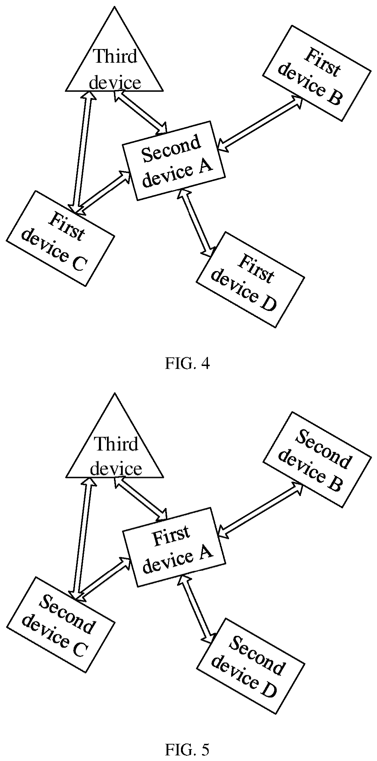

In FIG. 3, one first device, one second device and one third device are exemplarily shown. In FIG. 4, three first devices, one second device and one third device are exemplarily shown. In FIG. 5, one first device, three second devices and one third device are exemplarily shown. Similarly, there may be two first devices in FIG. 4, or there may be more first devices; and there may be more or fewer interaction relationships. There may be one second device in FIG. 5, or there may be more second devices; and there may be more or fewer interaction relationships.

The quantity settings and interaction settings of the first device, the second device and the third device mentioned above may be adjusted according to actual application scenarios or application requirements. Other sorting or interaction manners of the existing or future devices that can be implemented and are well known to those skilled in the art may all be applied thereto, which is not specifically limited.

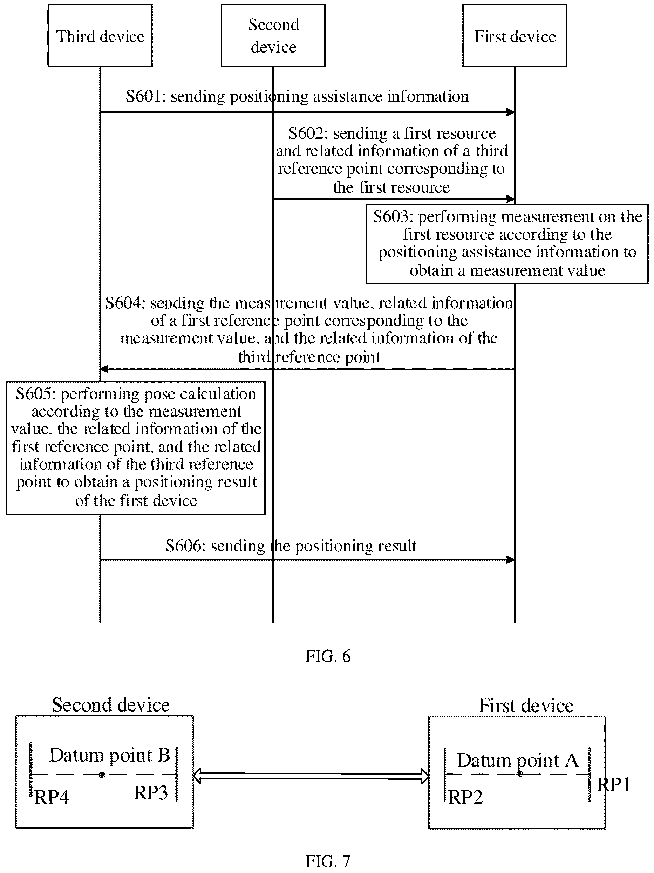

In order to facilitate readers to understand the implementation principles of the communication method of the present disclosure, the communication method of the present disclosure will now be described in detail with reference to FIG. 6 to FIG.13. FIG. 6 is a schematic diagram of a communication method according to another embodiment of the present disclosure. As shown in FIG. 6, the method includes the following steps.

S601: a third device sends positioning assistance information to a first device.

Exemplarily, the positioning assistance information includes at least one of an expected (expected) angle between a reference point in the first device and a reference point in a second device, an expected delay between the reference point in the first device and the reference point in the second device, an uncertainty (uncertainty) range of the expected angle, or an uncertainty range of the expected delay.

In some embodiments, the reference point in the first device includes a first reference point and a second reference point, and the reference point in the second device includes a third reference point and a fourth reference point.

The first reference point includes at least one of a reference point (Reference Point, RP) of the first device, an antenna panel center (panel center) of the first device, an antenna reference point (Antenna Reference Point, ARP) of the first device, or an antenna phase center (Antenna Phase Center, APC) of the first device.

The second reference point includes one of the following: a datum point of the first device, a first RP of the first device, a reference antenna panel center of the first device, a first ARP of the first device, or a reference APC of the first device.

The datum point in the first device is any point in the first device. For example, the datum point in the first device may be a geometric center point of the first device. The first RP in the first device refers to an RP used as a reference point among RPs in the first device. The understanding of the reference antenna panel center, the first ARP and the reference APC is the same as that of the reference RP, and will not be repeated here.

Correspondingly, the third reference point includes at least one of an RP of the second device, an antenna panel center of the second device, an ARP of the second device, or an APC of the second device. The fourth reference point includes one of the following: a datum point of the second device, a second RP of the second device, a reference antenna panel center of the second device, a second ARP of the second device, or a reference APC of the second device. For specific explanation, reference may be made to the description of the reference point in the first device, which will not be repeated here.

For example, as shown in FIG. 7, the first reference points include: datum point A, RP1 and RP2. The second reference point is a reference point used as a reference among the first reference points. For example, the second reference point may be the datum point A; or the second reference point may be one RP of the RP1 and the RP2, such as the RP1, and then the RP1 may be referred to as the first PR.

Similarly, as shown in FIG. 7, the third reference points includes: datum point B, RP3 and RP4. The fourth reference point is a reference point used as a reference among the third reference points. For example, the fourth reference point may be the datum point B; or the fourth reference point may be one RP of the RP3 and the RP4, such as the RP4, and then the RP4 may be referred to as the second PR.

Therefore, the positioning assistance information includes at least one of the following:
at least one of an expected angle between the first reference point and the third reference point, an expected delay between the first reference point and the third reference point, an uncertainty range of the expected angle, or an uncertainty range of the expected delay;
at least one of an expected angle between the first reference point and the fourth reference point, an expected delay between the first reference point and the fourth reference point, an uncertainty range of the expected angle, or an uncertainty range of the expected delay;
at least one of an expected angle between the second reference point and the third reference point, an expected delay between the second reference point and the third reference point, an uncertainty range of the expected angle, or an uncertainty range of the expected delay;
at least one of an expected angle between the second reference point and the fourth reference point, an expected delay between the second reference point and the fourth reference point, an uncertainty range of the expected angle, or an uncertainty range of the expected delay; or
at least one of an expected angle between the first device and the second device, an expected delay between the first device and the second device, an uncertainty range of the expected angle, or an uncertainty range of the expected delay.

For example, the positioning assistance information includes: an expected value of an angle measurement value: an expected SL azimuth angle of arrival (Azimuth Angle of Arrival, AoA), an expected SL zenith angle of arrival (Zenith Angle of Arrival, ZoA); and an expected value of a delay measurement value: an expected SL reference signal time difference (Reference Signal Time Difference, RSTD), an expected SL relative time of arrival (Relative Time of Arrival, RTOA), an expected Rx-Tx time difference (Rx-Tx time difference). The various expected angle and delay measurement values described here also represent various types of delay and angle measurement values, which will not be repeated later.

The expected angle may be an absolute angle or may be a differential angle. The measurement value includes an angle measurement value. For an angle measurement value ( ϕ_{A0A}-Δ ϕ_{A0A}/2, ϕ_{A0A} + Δ ϕ_{A0A}/2), ϕ_{A0A} is an expected SL AoA, and Δ ϕ_{A0A} is an uncertainty range of the expected SL AoA. The same applied for ZoA. For example, a value of Δ ϕ_{A0A} is 60 degrees, and a value of Δ ϕ_{Z0A} is 30 degrees.

The measurement value may include a distance measurement value. For a distance measurement value (t_{Rx-Tx time difference}- Δ _{Rx-Tx time difference}/2, t_{Rx-Tx time difference}+ Δ _{Rx-Tx time difference}/2), t_{Rx-Tx time difference} is a delay, and Δ_{Rx-Tx} time difference is an uncertainty range of the delay. For example, a value of Δ_{Rx-Tx} time difference is 50 nanoseconds (ns), and the delay may be an absolute delay or a differential delay. Here, the Rx-Tx time error is taken as an example only, and other types of the delay measurement values are similar and will not be repeated.

In some embodiments, positions of the second reference point and the fourth reference point may be known or unknown absolute or relative positions, which is not limited in this embodiment.

S602: the second device sends a first resource and related information of the third reference point corresponding to the first resource to the first device.

Before this step, the second device may notify the first device that the first resource and the related information of the third reference point are about to be sent.

The related information of the third reference point includes second position information and/or second identification information of the third reference point, and the second position information is second absolute position information or second relative position information. The second relative position information is position information of the third reference point relative to the fourth reference point.

In some embodiments, the second position information includes content in two dimensions, one being content in a position dimension, and the other being content in a dimension of uncertainty corresponding to position.

The content of the second position information in the position dimension may be referred to as a second position, which represents a geometric position of the third reference point. A representation form of the second position may be relative coordinates or absolute coordinates. The relative coordinates may be understood as relative coordinates of the third reference point with respect to the datum point in the second device, supporting both a geodetic coordinate system and a Cartesian coordinate system. The geodetic coordinate system may be represented by latitude, longitude and height, and the Cartesian coordinate system may be represented by three orthogonal directions of x, y and z, where specific units may be represented by equivalent light speed propagation time or distance units.

The content of the second position information in the uncertainty dimension may be referred to as a second uncertainty, which represents an uncertainty of the second position and may be represented by statistical characteristics of an error, such as a variance of a position deviation in different directions.

In some embodiments, the second identification information represents an identification (ID) of the third reference point, and the identification of the third reference point may specifically be the number of the third reference point in the second device.

In some embodiments, the first resources includes different resources of one second device, or the first resources includes resources of multiple second devices.

That is, the quantity of the first resources may be more than one or may be one. If the quantity of the first resources is one, then the first resource comes from one second device. If the quantity of the first resources is more than one, then multiple first resources may come from one second device, that is, one second device includes multiple first resources, or the multiple first resources may come from multiple second devices, that is, the multiple second devices include multiple first resources in total.

S603: the first device performs measurement on the first resource according to the positioning assistance information to obtain a measurement value.

S604: the first device sends the measurement value, related information of the first reference point corresponding to the measurement value, and the related information of the third reference point to the third device.

In some embodiments, the measurement value is a differential measurement value or an absolute measurement value. In a case where the measurement value is the differential measurement value, the differential measurement value may be obtained by performing differencing on different first reference points for the same first resource, or by performing differencing on different first resources for the same first reference point.

Exemplarily, the measurement value may be obtained by performing differencing on an RP and an ARP in the same first resource, and the measurement value may also be obtained by performing differencing on ARPs in different first resources.

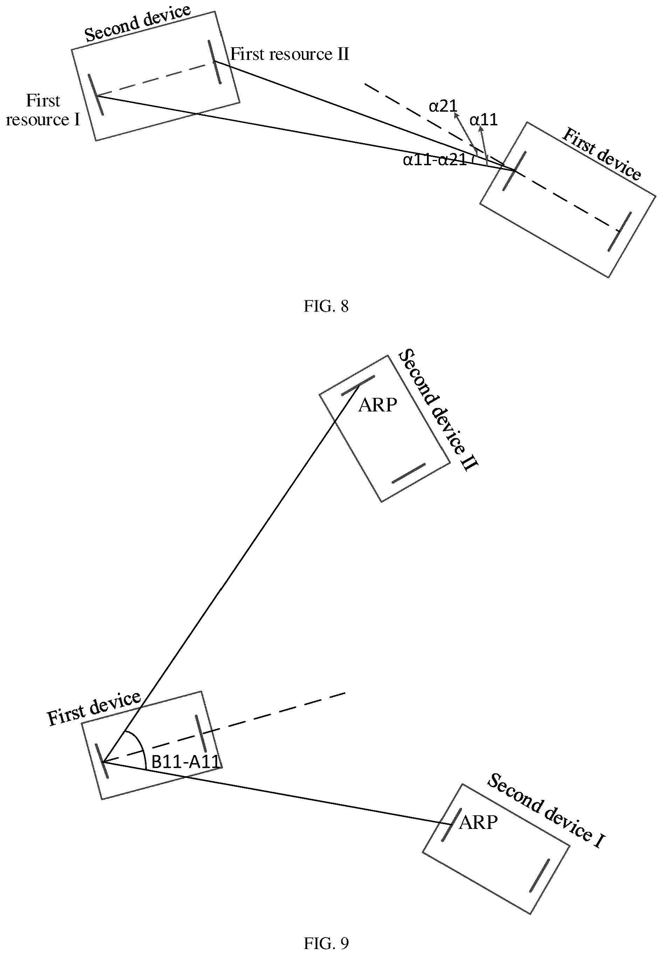

For example, a measurement value α11-α21 in FIG. 8 is obtained by performing differencing on the first resources (first resource I and first resource II shown in FIG. 8) in the same second device.

A measurement value B11-A11 in FIG. 9 is obtained by performing differencing on different first resources (ARPs shown in FIG. 9) in different second devices (second device I and second device II shown in FIG. 9).

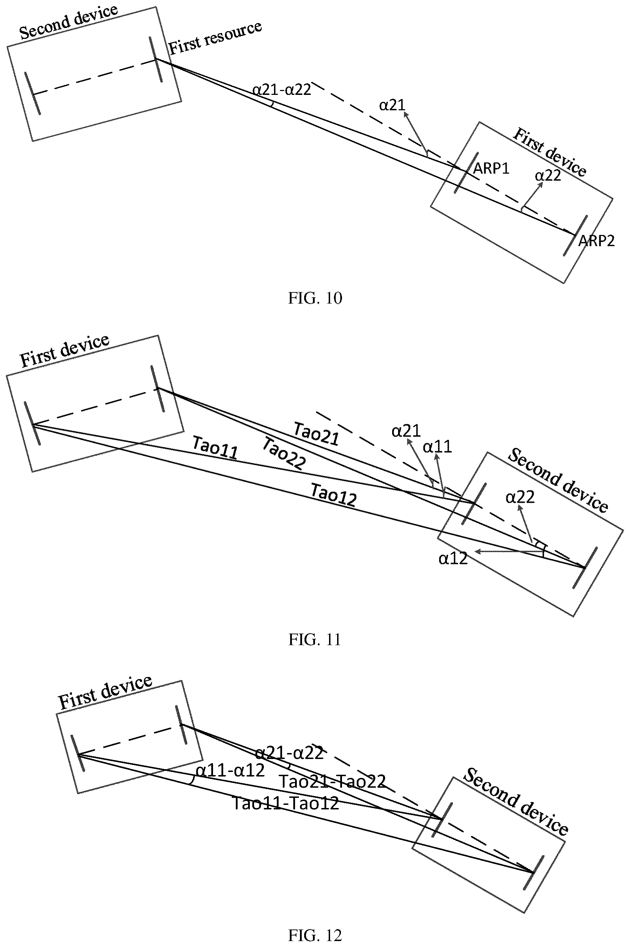

A measurement value α21-α22 in FIG. 10 is obtained by performing differencing on different first reference points (ARP1 and ARP2 shown in FIG. 10) in the first device based on the first resource in the second device.

In some embodiments, the measurement value includes the angle measurement value and the time delay measurement value, and the angle measurement value and the time delay measurement value may be reported based on an absolute form, or may be reported based on a differential form. The delay measurement value reported based on the absolute form may be referred to as an absolute delay measurement value, and the angle measurement value reported based on the absolute form may be referred to as an absolute angle measurement value. The delay measurement value reported based on the differential form may be referred to as a differential delay measurement value, and the angle measurement value reported based on the differential form may be referred to as a differential angle measurement value.

For example, the absolute delay measurement values in FIG. 11 include Tao11, Tao12, Tao21 and Tao22. The differential delay measurement values in FIG. 12 include Tao11-Tao12 and Tao21-Tao22. The absolute angle measurement values in FIG. 11 include α11, α12, α21 and α22. The differential angle measurement values in FIG. 12 include α11-α12 and α21-α22

A reference direction of the angle measurement value may be a local coordinate system (Local Coordinate System, LCS), or may be a global coordinate system (Global Coordinate System, GCS). That is, the angle measurement value is a measurement value in the global coordinate system or a measurement value in the local coordinate system. When reporting the measurement value, an explicit or implicit indication of a coordinate system type of the measurement value is provided at the same time. The explicit indication is that 0 represents the LCS, and 1 represents the GCS. The implicit indication is, for example, that for the LCS, a conversion matrix from the LCS to the GCS is reported, and for the GCS, there is no need to report the conversion matrix from the LCS to the GCS.

In some embodiments, the related information of the first reference point includes first position information and/or first identification information of the first reference point. The first position information is first absolute position information or first relative position information. The first relative position information is position information of the first reference point relative to the second reference point of the first device.

For the description of the first position information, reference may be made to the description of the second position information and the second identification information mentioned above, which will not be repeated here.

Similarly, the first identification information represents an identification of the first reference point, and the identification of the first reference point may specifically be the number of the first reference point in the first device.

For example, the first device is provided with an identification, and antenna panels on the first device include antenna panel centers. Measurement values on the antenna panel centers carry identifications of the corresponding antenna panel centers. That is, which antenna panel that a measurement value comes from can be identified by the identification of the first device + the identification of the antenna panel center.

For another example, the first device is provided with the identification, and the antenna panels on the first device include the antenna panel centers. The measurement values on the antenna panel centers carry the identifications of the corresponding antenna panel centers. ARPs on the first device also have identifications, then measurement values on the ARPs of the first device carry identifications of the corresponding ARPs. That is, a specific ARP of a specific antenna panel that a measurement value comes from can be identified by the identification of the first device + the identification of the antenna panel center + the identification of the ARP.

The same applies to the description of the identification of an APC on the first device, which will not be enumerated here.

S605: the third device performs position calculation according to the measurement value, the related information of the first reference point, and the related information of the third reference point to obtain a positioning result of the first device.

S606: the third device sends the positioning result to the first device.

It is worth noting that the above examples are only used to exemplarily illustrate possible implementations of the communication method of the present disclosure, and cannot be understood as limitations to the communication method of the present disclosure.

In one aspect, for example, the third device may also send the positioning assistance information to the second device; the first device may send a second resource and related information of a reference point corresponding to the second resource to the second device; the second device may perform measurement, and the third device may receive a measurement value obtained through the measurement by the second device and related information of a reference point corresponding to the measurement value. For another example, the second device may send the related information of the third reference point to the third device, and the first device does not need to send the third reference point to the third device. For yet another example, the third device may send the positioning result to the second device. For still another example, the first device may send obtained information of a Uu interface to the third device, so that the third device performs position calculation in combination with the information of the Uu interface. Other examples will not be enumerated here.

The information of the Uu interface includes an uplink-downlink positioning measurement value, base station position-related information, a line of sight (Line of Sight, LOS) indication, a non line of sight (Non Line of Sight, NLOS) indication, etc. The specific uplink-downlink positioning measurement value have been mentioned previously when introducing the measurement value and will not be elaborated here. The base station position information represents a geographic position of a base station.

In another aspect, in conjunction with the above analysis, it can be seen that the above embodiments may be illustrations of a communication method applied to the application scenario shown in FIG. 3, and may also be applied to the application scenarios shown in FIG. 4 and FIG. 5.

Exemplarily, for the application scenario shown in FIG. 4 to which the above embodiments are applied, as shown in FIG. 4, the second device is second device A; the first devices include first device B, first device C and first device D; the third device may send corresponding positioning assistance information to the first device B, the first device C and the first device D respectively. For example, positioning assistance information corresponding to the first device B is sent to the first device B, and the positioning assistance information includes an expected angle between a reference point in the first device B and a reference point in the second device A, an expected delay between the reference point in the first device B and the reference point in the second device A, an uncertainty range of the expected angle, and an uncertainty range of the expected delay. The same applies to positioning assistance information corresponding to the first device C and the first device D, which will not be enumerated here.

Correspondingly, at least some of the first devices among the first device B, the first device C and the first device D may execute the solutions of the above embodiments to obtain corresponding measurement values, and send the corresponding measurement values and related information of corresponding reference points to the third device. The third device may perform position calculation according to the information received from the at least some of the first devices.

For the application scenario shown in FIG. 5 to which the above embodiments are applied, as shown in FIG. 5, the first device is first device A; the second devices include second device B, second device C and second device D; the third device may send, to the first device A, corresponding positioning assistance information of the first device A relative to the second device B, the second device C and the second device D respectively. For example, positioning assistance information of the first device A relative to the second device B is sent to the first device A, and the positioning assistance information includes an expected angle between a reference point in the second device B and a reference point in the first device A, an expected delay between the reference point in the second device B and the reference point in the first device A, an uncertainty range of the expected angle, and an uncertainty range of the expected delay. The same applies to positioning assistance information of the first device A relative to the second device C and the second device D, which will not be enumerated here.

Correspondingly, the first device may execute the solutions of the above embodiments for at least some of the second devices among the second device B, the second device C and the second device D to obtain corresponding measurement values, and send the corresponding measurement values and related information of corresponding reference points to the third device. The third device may perform position calculation according to at least some of information received from the first device.

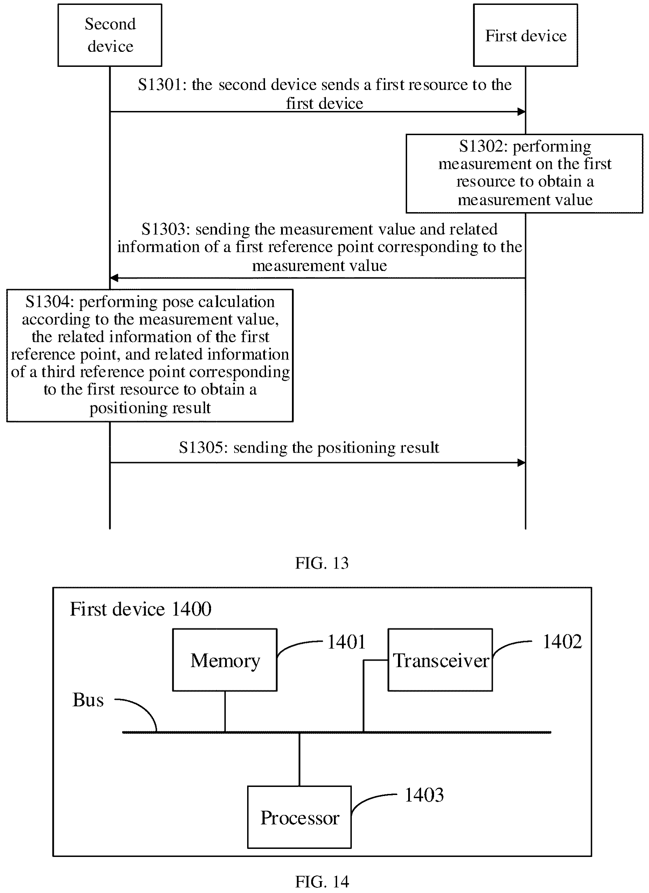

FIG. 13 is a schematic diagram of a communication method according to another embodiment of the present disclosure. This method may be applied to the application scenario shown in FIG. 2. As shown in FIG. 13, the method includes the following steps.

S1301: a second device sends a first resource to a first device.

It should be understood that, in order to avoid cumbersome statements, the same technical features as the above embodiments will not be repeated in this embodiment.

Exemplarily, for the implementation principle of S1301, reference can be made to the description of S602, which will not be repeated here.

S1302: the first device performs measurement on the first resource to obtain a measurement value.

S1303: the first device sends the measurement value and related information of a first reference point corresponding to the measurement value to the second device.

Similarly, for the implementation principles of S1302-S1303, reference can be made to the description of S603-S604, which will not be repeated here.

S1304: the second device performs position calculation according to the measurement value, the related information of the first reference point, and related information of a third reference point corresponding to the first resource to obtain a positioning result.

S1305: the second device sends the positioning result to the first device.

Similarly, adaptive adjustments may be made to the above embodiments to obtain new embodiments. For example, the second device performs position calculation according to the measurement value and the related information of the first reference point to obtain the positioning result. For another example, the first device may perform position calculation according to the measurement value and the related information of the first reference point to obtain the positioning result. For yet another example, the second device may send the related information of the third reference point to the first device, and the first device may perform position calculation according to the measurement value, the related information of the first reference point, and the related information of the third reference point to obtain the positioning result. For still another example, the first device may send a second resource and related information of a reference point corresponding to the second resource to the second device, and the second device may perform measurement to obtain a second measurement result. Other examples will not be enumerated here.

The present disclosure provides a first device. As shown in FIG. 14, the first device 1400 includes a memory 1401, a transceiver 1402 and a processor 1403;
the memory 1401 is configured to store a computer program; the transceiver 1402 is configured to transmit and receive data under control of the processor; the processor 1403 is configured to read the computer program in the memory and perform the following operations:
receiving a first resource sent by a second device;
performing measurement on the first resource to obtain a measurement value;
sending the measurement value and related information of a first reference point corresponding to the measurement value to the second device or a third device.

In some embodiments, the related information of the first reference point includes first position information and/or first identification information of the first reference point.

In some embodiments, the first position information is first absolute position information or first relative position information.

In some embodiments, the first reference point includes at least one of a reference point RP of the first device, an antenna panel center of the first device, an antenna reference point ARP of the first device, or an antenna phase center APC of the first device.

In some embodiments, the first relative position information is position information of the first reference point relative to a second reference point of the first device;
where the second reference point includes one of the following: a datum point on the first device, a first reference point RP of the first device, a reference antenna panel center of the first device, a first antenna reference point ARP of the first device, or a reference antenna phase center APC of the first device;
where the datum point is any point on the first device.

In some embodiments, the processor 1403 is further configured to perform the following operation:
receiving positioning assistance information sent by the third device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In some embodiments, the measurement value is a differential measurement value or an absolute measurement value.

In some embodiments, the differential measurement value is determined based on one of the following differential forms:
a differential form on different first reference points for a same first resource; or
a differential form on different first resources for a same first reference point.

In some embodiments, the measurement value includes an angle measurement value, and the angle measurement value is a measurement value in a global coordinate system or a measurement value in a local coordinate system.

In some embodiments, the processor 1403 is further configured to perform the following operations:
receiving related information of a third reference point corresponding to the first resource that is sent by the second device;
sending the related information of the third reference point to the third device.

In some embodiments, the processor 1403 is further configured to perform the following operations:
receiving a positioning result fed back by the second device;
receiving a positioning result fed back by the third device.

In some embodiments, the processor 1403 is further configured to perform the following operation:
sending obtained information of a Uu interface to the third device or the second device.

In some embodiments, a quantity of the first resource is more than one; first resources include one of the following:
the first resources include different resources of one second device; or
the first resources include resources of multiple second devices.

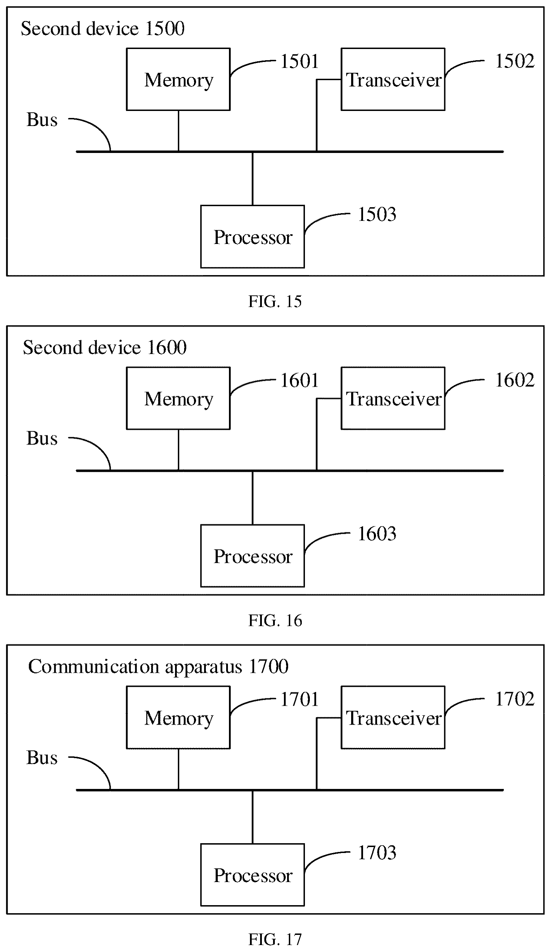

The present disclosure provides a first device. As shown in FIG. 15, the first device 1500 includes a memory 1501, a transceiver 1502 and a processor 1503;
the memory 1501 is configured to store a computer program; the transceiver 1502 is configured to transmit and receive data under control of the processor; the processor 1503 is configured to read the computer program in the memory and perform the following operation:
receiving a first resource and related information of a third reference point corresponding to the first resource that are sent by a second device.

In some embodiments, the processor 1503 is further configured to perform the following operation:
determining a positioning result according to the first resource and the related information of the third reference point.

In some embodiments, determining, by the processor 1503, the positioning result according to the first resource and the related information of the third reference point specifically includes at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface, and the related information of the first reference point corresponding to the measurement value.

In some embodiments, the processor 1503 is further configured to perform the following operations:
performing measurement on the first resource to obtain a measurement value, and sending the measurement value and the related information of the third reference point to a third device;
performing measurement on the first resource to obtain the measurement value, and sending the measurement value, related information of a first reference point corresponding to the measurement value, and the related information of the third reference point to the third device.

In some embodiments, the processor 1503 is further configured to perform the following operations:
sending information of a Uu interface to the third device;
sending the related information of the first reference point corresponding to the measurement value to the third device.

In some embodiments, the processor 1503 is further configured to perform the following operation:
receiving a positioning result fed back by the third device.

The present disclosure provides a second device. As shown in FIG. 16, the second device 1600 includes a memory 1601, a transceiver 1602 and a processor 1603;
the memory 1601 is configured to store a computer program; the transceiver 1602 is configured to transmit and receive data under control of the processor; the processor 1603 is configured to read the computer program in the memory and perform the following operation:
sending a first resource and related information of a third reference point corresponding to the first resource.

In some embodiments, the third reference point includes at least one of a reference point RP of the second device, an antenna panel center of the second device, an antenna reference point ARP of the second device, or an antenna phase center APC of the second device.

In some embodiments, the related information of the third reference point includes second position information and/or second identification information of the third reference point, and the second position information is second absolute position information or second relative position information.

In some embodiments, the second relative position information is position information of the third reference point relative to a fourth reference point of the second device;
where the fourth reference point includes one of the following: a datum point on the second device, a second reference point RP of the second device, a reference antenna panel center of the second device, a second antenna reference point ARP of the second device, or a reference antenna phase center APC of the second device;
where the datum point is any point on the second device.

In some embodiments, sending, by the processor 1603, the first resource and the related information of the third reference point corresponding to the first resource specifically includes one of the following:
sending the first resource and the related information of the third reference point to a first device; or
sending the first resource to the first device and sending the related information of the third reference point to a third device.

In some embodiments, the processor 1603 is further configured to perform the following operation:
receiving a positioning result.

The present disclosure provides a communication apparatus. As shown in FIG. 17, the communication apparatus 1700 includes a memory 1701, a transceiver 1702 and a processor 1703;
the memory 1701 is configured to store a computer program; the transceiver 1702 is configured to transmit and receive data under control of the processor; the processor 1703 is configured to read the computer program in the memory and perform the following operations:
receiving a measurement value and related information of a first reference point corresponding to the measurement value that are sent by a first device;
determining a positioning result according to the measurement value and the related information of the first reference point.

In some embodiments, the processor 1703 is further configured to perform the following operation:
receiving information of a Uu interface sent by the first device;
where determining the positioning result according to the measurement value and the related information of the first reference point includes: determining the positioning result according to the measurement value, the related information of the first reference point, and the information of the Uu interface.

In some embodiments, determining, by the processor 1703, the positioning result according to the measurement value and the related information of the first reference point specifically includes:
determining the positioning result according to the measurement value, the related information of the first reference point, and related information of a third reference point corresponding to a first resource used to determine the measurement value.

In some embodiments, the processor 1703 is further configured to perform the following operation:
sending the positioning result to the first device.

In some embodiments, the method is applied to a third device, and the processor 1703 is further configured to perform the following operation:
receiving related information of a third reference point corresponding to a first resource used to determine the measurement value, where the related information of the third reference point is sent by the first device or a second device;
where determining the positioning result according to the measurement value and the related information of the first reference point includes: determining the positioning result according to the measurement value, the related information of the first reference point, and the related information of the third reference point.

In some embodiments, the processor 1703 is further configured to perform the following operations:
sending the positioning result to the first device;
sending the positioning result to the second device.

In some embodiments, the processor 1703 is further configured to perform the following operation:
sending positioning assistance information to the first device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

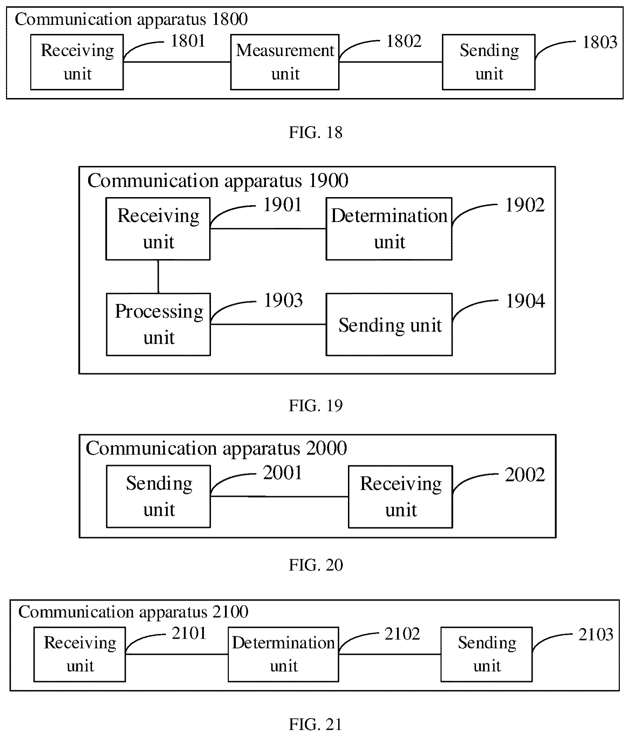

The present disclosure provides a communication apparatus. The apparatus is applied to a first device. As shown in FIG. 18, the apparatus 1800 includes:
a receiving unit 1801, configured to receive a first resource sent by a second device;
a measurement unit 1802, configured to perform measurement on the first resource to obtain a measurement value;
a sending unit 1803, configured to send the measurement value and related information of a first reference point corresponding to the measurement value to the second device or a third device.

In some embodiments, the related information of the first reference point includes first position information and/or first identification information of the first reference point.

In some embodiments, the first position information is first absolute position information or first relative position information.

In some embodiments, the first reference point includes at least one of a reference point RP of the first device, an antenna panel center of the first device, an antenna reference point ARP of the first device, or an antenna phase center APC of the first device.

In some embodiments, the first relative position information is position information of the first reference point relative to a second reference point of the first device;
where the second reference point includes one of the following: a datum point on the first device, a first reference point RP of the first device, a reference antenna panel center of the first device, a first antenna reference point ARP of the first device, or a reference antenna phase center APC of the first device;
where the datum point is any point on the first device.

In some embodiments, the receiving unit 1801 is further configured to receive positioning assistance information sent by the third device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

In some embodiments, the measurement value is a differential measurement value or an absolute measurement value.

In some embodiments, the differential measurement value is determined based on one of the following differential forms:
a differential form on different first reference points for a same first resource; or
a differential form on different first resources for a same first reference point.

In some embodiments, the measurement value includes an angle measurement value, and the angle measurement value is a measurement value in a global coordinate system or a measurement value in a local coordinate system.

In some embodiments, the receiving unit 1801 is further configured to receive related information of a third reference point corresponding to the first resource that is sent by the second device;
the sending unit 1803 is further configured to send the related information of the third reference point to the third device.

In some embodiments, the receiving unit 1801 is further configured to perform one of the following:
receiving a positioning result fed back by the second device; or
receiving a positioning result fed back by the third device.

In some embodiments, the sending unit 1803 is further configured to send obtained information of a Uu interface to the third device or the second device.

In some embodiments, a quantity of the first resource is more than one; first resources include one of the following:
the first resources include different resources of one second device; or
the first resources include resources of multiple second devices.

The present disclosure provides a communication apparatus. The apparatus is applied to a first device. As shown in FIG. 19, the apparatus 1900 includes:
a receiving unit 1901, configured to receive a first resource and related information of a third reference point corresponding to the first resource that are sent by a second device.
a determination unit 1902, configured to determine a positioning result according to the first resource and the related information of the third reference point.

In some embodiments, the determination unit 1902 is configured to perform at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface, and the related information of the first reference point corresponding to the measurement value.

In some embodiments, the apparatus 1900 further includes a processing unit 1903, and the processing unit 1903 is configured to perform one of the following:
performing measurement on the first resource to obtain a measurement value, and sending the measurement value and the related information of the third reference point to a third device; or
performing measurement on the first resource to obtain the measurement value, and sending the measurement value, related information of a first reference point corresponding to the measurement value, and the related information of the third reference point to the third device.

In some embodiments, the apparatus 1900 further includes a sending unit 1904, and the sending unit 1904 is configured to perform at least one of the following:
sending information of a Uu interface to the third device; or
sending the related information of the first reference point corresponding to the measurement value to the third device.

In some embodiments, the receiving unit 1901 is further configured to receive a positioning result fed back by the third device.

The present disclosure provides a communication apparatus. The apparatus is applied to a second device. As shown in FIG. 20, the apparatus 2000 includes:
a sending unit 2001, configured to send a first resource and related information of a third reference point corresponding to the first resource.

In some embodiments, the third reference point includes at least one of a reference point RP of the second device, an antenna panel center of the second device, an antenna reference point ARP of the second device, or an antenna phase center APC of the second device.

In some embodiments, the related information of the third reference point includes second position information and/or second identification information of the third reference point, and the second position information is second absolute position information or second relative position information.

In some embodiments, the second relative position information is position information of the third reference point relative to a fourth reference point of the second device;
where the fourth reference point includes one of the following: a datum point on the second device, a second reference point RP of the second device, a reference antenna panel center of the second device, a second antenna reference point ARP of the second device, or a reference antenna phase center APC of the second device;
where the datum point is any point on the second device.

In some embodiments, the sending unit 2001 is configured to perform one of the following:
sending the first resource and the related information of the third reference point to a first device; or
sending the first resource to the first device and sending the related information of the third reference point to a third device.

In some embodiments, the apparatus 2000 further includes a receiving unit 2002, and the receiving unit 2002 is configured to receive a positioning result.

The present disclosure provides a communication apparatus. As shown in FIG. 21, the apparatus 2100 including:
a receiving unit 2101, configured to receive a measurement value and related information of a first reference point corresponding to the measurement value that are sent by a first device;
a determination unit 2102, configured to determine a positioning result according to the measurement value and the related information of the first reference point.

In some embodiments, the receiving unit 2101 is further configured to receive information of a Uu interface sent by the first device;
where determining the positioning result according to the measurement value and the related information of the first reference point includes: determining the positioning result according to the measurement value, the related information of the first reference point, and the information of the Uu interface.

In some embodiments, the determination unit 2102 is configured to determine the positioning result according to the measurement value, the related information of the first reference point, and related information of a third reference point corresponding to a first resource used to determine the measurement value.

In some embodiments, the apparatus 2100 further includes a sending unit 2103, and the sending unit 2103 is configured to send the positioning result to the first device.

In some embodiments, the apparatus 2100 is applied to a third device, and the receiving unit 2101 is further configured to receive related information of a third reference point corresponding to a first resource used to determine the measurement value, where the related information of the third reference point is sent by the first device or a second device;
the determination unit 2102 is specifically configured to determine the positioning result according to the measurement value, the related information of the first reference point, and the related information of the third reference point.

In some embodiments, the sending unit 2103 is further configured to: send the positioning result to the first device;
send the positioning result to the second device.

In some embodiments, the sending unit 2103 is further configured to send positioning assistance information to the first device, where the positioning assistance information is used to determine the measurement value.

In some embodiments, the positioning assistance information includes at least one of an expected angle between a reference point in the first device and a reference point in the second device, an expected delay between the reference point in the first device and the reference point in the second device, an uncertainty range of the expected angle, or an uncertainty range of the expected delay.

It should be noted that the above apparatuses provided by the embodiments of the present disclosure can implement all the method steps implemented by the above method embodiments, and can achieve the same technical effects. The part of the embodiments which is same as the method embodiments and the beneficial effects thereof will not be described in detail here.

In addition, it should be noted that a division of units in the embodiments of the present disclosure is schematic and is only a logical function division, and there may be other division manners in actual implementation. In addition, the functional units in the embodiments of the present disclosure may be integrated in one processing unit, or each unit may exist physically alone, or two or more units may be integrated in one unit. The above-mentioned integrated unit may be implemented in a form of hardware, or may be implemented in a form of a software functional unit.

If implemented in the form of the software functional unit and sold or used as an independent product, the integrated unit may be stored in a processor-readable storage medium. Based on this understanding, a technical solution of the present disclosure essentially or a part thereof that contributes to the prior art or all or part of the technical solution can be embodied in a form of a software product. The computer software product is stored in a storage medium and includes several instructions for making a computer device (which may be a personal computer, a server, or a network device, etc.) or a processor (processor) execute all or part of steps of the methods in the embodiments of the present disclosure. The aforementioned storage medium includes: a USB flash disk, a mobile hard disk, a read-only memory (Read-Only Memory, ROM), a random access memory (Random Access Memory, RAM), a magnetic disk, an optical disk or other media that can store program codes.

The present disclosure further provides a processor-readable storage medium, where the processor-readable storage medium stores a computer program, and the computer program is used to cause a processor to execute the communication method as described in any one of the above embodiments.

The processor-readable storage medium may be any available medium or data storage device that the processor can access, including but not limited to, a magnetic memory (such as a floppy disk, a hard disk, a magnetic tape, a magneto-optical disk (MO), etc.), an optical memory (such as a CD, a DVD, a BD, an HVD, etc.), and a semiconductor memory (such as a ROM, an EPROM, an EEPROM, a non-volatile memory (NAND FLASH), a solid state disk (SSD)), etc.

The present disclosure further provides a computer program product, including a computer program, and when the computer program is executed by a processor, the method as described in any one of the above embodiments is implemented.

The present disclosure further provides an electronic device, including: a processor and a memory communicatively connected to the processor;
the memory stores computer execution instructions;
the processor executes the computer execution instructions stored in the memory to implement the method as described in any one of the above embodiments.

It should be understood by those skilled in the art that the embodiments of the present disclosure can be provided as methods, systems or computer program products. Therefore, the present disclosure may take forms of entire-hardware embodiments, entire-software embodiments, or embodiments combining software and hardware aspects. Furthermore, the present disclosure may take a form of a computer program product implemented on one or more computer-usable storage media (including but not limited to a magnetic disk storage, an optical storage, etc.) in which computer-usable program codes are included.

The present disclosure is described with reference to flowcharts and/or block diagrams of methods, devices (systems) and computer program products according to the embodiments of the present disclosure. It should be understood that each flow and/or block in the flowcharts and/or block diagrams, and a combination of flows and/or blocks in the flowcharts and/or block diagrams may be implemented by computer-executable instructions. These computer-executable instructions may be provided to a processor of a general-purpose computer, a special-purpose computer, an embedded processor or other programmable data processing devices to produce a machine, so that an apparatus for implementing functions specified in one or more flows of the flowcharts and/or one or more blocks of the block diagrams is produced by instructions executed by the processor of the computer or other programmable data processing devices.

These processor-executable instructions may also be stored in a processor-readable memory that can guide a computer or other programmable data processing devices to work in a specific way, so that the instructions stored in the processor-readable memory produce a manufactured product including an instruction apparatus, and the instruction apparatus implements functions specified in one or more flows of the flowcharts and/or one or more blocks of the block diagrams.

These processor-executable instructions may also be loaded on a computer or other programmable data processing devices, so that a series of operation steps are executed on the computer or other programmable devices to produce computer-implemented processing, whereby the instructions executed on the computer or other programmable devices provide steps for implementing functions specified in one or more flows of the flowcharts and/or one or more blocks of the block diagrams.

Obviously, those skilled in the art can make various modifications and variations to the present disclosure without departing from the spirit and scope of the present disclosure. Thus, if these modifications and variations of the present disclosure are within the scope of claims of the present disclosure and their equivalent technology, the present disclosure is also intended to include these modifications and variations.

## Claims

1. A communication method, **characterized in that** the method is applied to a first device, and the method comprises:
receiving a first resource sent by a second device;
performing measurement on the first resource to obtain a measurement value;
sending the measurement value and related information of a first reference point corresponding to the measurement value to the second device or a third device.

2. The method according to claim 1, wherein the related information of the first reference point comprises first position information and/or first identification information of the first reference point.

3. The method according to claim 2, wherein the first position information is first absolute position information or first relative position information.

4. The method according to claim 2, wherein the first reference point comprises at least one of a reference point RP of the first device, an antenna panel center of the first device, an antenna reference point ARP of the first device, or an antenna phase center APC of the first device.

5. The method according to claim 3, wherein the first relative position information is position information of the first reference point relative to a second reference point of the first device;
wherein the second reference point comprises one of the following: a datum point on the first device, a first reference point RP of the first device, a reference antenna panel center of the first device, a first antenna reference point ARP of the first device, or a reference antenna phase center APC of the first device;
wherein the datum point is any point on the first device.

6. The method according to any one of claims 1-5, wherein the method further comprises:
receiving positioning assistance information sent by the third device, wherein the positioning assistance information is used to determine the measurement value.

7. The method according to claim 6, wherein the positioning assistance information comprises at least one of an expected angle between a reference point in the first device and a reference point in the second device, an expected delay between the reference point in the first device and the reference point in the second device, an uncertainty range of the expected angle, or an uncertainty range of the expected delay.

8. The method according to any one of claims 1-7, wherein the measurement value is a differential measurement value or an absolute measurement value.

9. The method according to claim 8, wherein the differential measurement value is determined based on one of the following differential forms:
a differential form on different first reference points for a same first resource; or
a differential form on different first resources for a same first reference point.

10. The method according to any one of claims 1-9, wherein the measurement value comprises an angle measurement value, and the angle measurement value is a measurement value in a global coordinate system or a measurement value in a local coordinate system.

11. The method according to any one of claims 1-10, wherein the method further comprises:
receiving related information of a third reference point corresponding to the first resource that is sent by the second device;
sending the related information of the third reference point to the third device.

12. The method according to any one of claims 1-11, wherein the method further comprises:
sending obtained information of a Uu interface to the third device or the second device.

13. A communication method, **characterized in that** the method is applied to a first device, and the method comprises:
receiving a first resource and related information of a third reference point corresponding to the first resource that are sent by a second device.

14. The method according to claim 13, wherein the method further comprises:
determining a positioning result according to the first resource and the related information of the third reference point.

15. The method according to claim 14, wherein determining the positioning result according to the first resource and the related information of the third reference point comprises at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface, and the related information of the first reference point corresponding to the measurement value.

16. The method according to claim 15, wherein the related information of the third reference point comprises second position information and/or second identification information of the third reference point.

17. The method according to claim 13, wherein the method further comprises one of the following:
performing measurement on the first resource to obtain a measurement value, and sending the measurement value and the related information of the third reference point to a third device; or
performing measurement on the first resource to obtain the measurement value, and sending the measurement value, related information of a first reference point corresponding to the measurement value, and the related information of the third reference point to the third device.

18. The method according to claim 17, wherein the method further comprises at least one of the following:
sending information of a Uu interface to the third device; or
sending the related information of the first reference point corresponding to the measurement value to the third device.

19. A communication method, **characterized in that** the method is applied to a second device, and the method comprises:
sending a first resource and related information of a third reference point corresponding to the first resource.

20. The method according to claim 19, wherein the third reference point comprises at least one of a reference point RP of the second device, an antenna panel center of the second device, an antenna reference point ARP of the second device, or an antenna phase center APC of the second device.

21. The method according to claim 20, wherein the related information of the third reference point comprises second position information and/or second identification information of the third reference point, and the second position information is second absolute position information or second relative position information.

22. The method according to claim 21, wherein the second relative position information is position information of the third reference point relative to a fourth reference point of the second device;
wherein the fourth reference point comprises one of the following: a datum point on the second device, a second reference point RP of the second device, a reference antenna panel center of the second device, a second antenna reference point ARP of the second device, or a reference antenna phase center APC of the second device;
wherein the datum point is any point on the second device.

23. The method according to any one of claims 19-22, wherein sending the first resource and the related information of the third reference point corresponding to the first resource comprises one of the following:
sending the first resource and the related information of the third reference point to a first device; or
sending the first resource to the first device and sending the related information of the third reference point to a third device.

24. A communication method, **characterized by** comprising:
receiving a measurement value and related information of a first reference point corresponding to the measurement value that are sent by a first device;
determining a positioning result according to the measurement value and the related information of the first reference point.

25. The method according to claim 24, wherein the method further comprises:
receiving information of a Uu interface sent by the first device;
wherein determining the positioning result according to the measurement value and the related information of the first reference point comprises: determining the positioning result according to the measurement value, the related information of the first reference point, and the information of the Uu interface.

26. The method according to claim 25, wherein determining the positioning result according to the measurement value and the related information of the first reference point comprises:
determining the positioning result according to the measurement value, the related information of the first reference point, and related information of a third reference point corresponding to a first resource used to determine the measurement value.

27. The method according to claim 24, wherein the method is applied to a third device, and the method further comprises:
receiving related information of a third reference point corresponding to a first resource used to determine the measurement value, wherein the related information of the third reference point is sent by the first device or a second device;
wherein determining the positioning result according to the measurement value and the related information of the first reference point comprises: determining the positioning result according to the measurement value, the related information of the first reference point, and the related information of the third reference point.

28. The method according to claim 27, wherein the method further comprises:
sending positioning assistance information to the first device, wherein the positioning assistance information is used to determine the measurement value.

29. The method according to claim 28, wherein the positioning assistance information comprises at least one of an expected angle between a reference point in the first device and a reference point in the second device, an expected delay between the reference point in the first device and the reference point in the second device, an uncertainty range of the expected angle, or an uncertainty range of the expected delay.

30. A first device, **characterized by** comprising a memory, a transceiver and a processor;
wherein the memory is configured to store a computer program; the transceiver is configured to transmit and receive data under control of the processor; the processor is configured to read the computer program in the memory and perform the following operations:
receiving a first resource sent by a second device;
performing measurement on the first resource to obtain a measurement value;
sending the measurement value and related information of a first reference point corresponding to the measurement value to the second device or a third device.

31. The first device according to claim 30, wherein the related information of the first reference point comprises first position information and/or first identification information of the first reference point.

32. The first device according to claim 31, wherein the first position information is first absolute position information or first relative position information.

33. The first device according to claim 32, wherein the first reference point comprises at least one of a reference point RP of the first device, an antenna panel center of the first device, an antenna reference point ARP of the first device, or an antenna phase center APC of the first device.

34. The first device according to claim 32, wherein the first relative position information is position information of the first reference point relative to a second reference point of the first device;
wherein the second reference point comprises one of the following: a datum point on the first device, a first reference point RP of the first device, a reference antenna panel center of the first device, a first antenna reference point ARP of the first device, or a reference antenna phase center APC of the first device;
wherein the datum point is any point on the first device.

35. The first device according to any one of claims 30-34, wherein the processor is further configured to perform the following operation:
receiving positioning assistance information sent by the third device, wherein the positioning assistance information is used to determine the measurement value.

36. The first device according to claim 35, wherein the positioning assistance information comprises at least one of an expected angle between a reference point in the first device and a reference point in the second device, an expected delay between the reference point in the first device and the reference point in the second device, an uncertainty range of the expected angle, or an uncertainty range of the expected delay.

37. The first device according to any one of claims 30-36, wherein the measurement value is a differential measurement value or an absolute measurement value.

38. The first device according to claim 37, wherein the differential measurement value is determined based on one of the following differential forms:
a differential form on different first reference points for a same first resource; or
a differential form on different first resources for a same first reference point.

39. The first device according to any one of claims 30-38, wherein the measurement value comprises an angle measurement value, and the angle measurement value is a measurement value in a global coordinate system or a measurement value in a local coordinate system.

40. The first device according to any one of claims 30-39, wherein the processor is further configured to perform the following operations:
receiving related information of a third reference point corresponding to the first resource that is sent by the second device;
sending the related information of the third reference point to the third device.

41. The first device according to any one of claims 30-40, wherein the processor is further configured to perform the following operation:
sending obtained information of a Uu interface to the third device or the second device.

42. The first device according to any one of claims 30-41, wherein a quantity of the first resource is more than one; first resources comprise one of the following:
the first resources comprise different resources of one second device; or
the first resource comprise resources of multiple second devices.

43. A first device, **characterized by** comprising a memory, a transceiver and a processor;
wherein the memory is configured to store a computer program; the transceiver is configured to transmit and receive data under control of the processor; the processor is configured to read the computer program in the memory and perform the following operation:
receiving a first resource and related information of a third reference point corresponding to the first resource that are sent by a second device.

44. The first device according to claim 43, wherein the processor is further configured to perform the following operation:
determining a positioning result according to the first resource and the related information of the third reference point.

45. The first device according to claim 44, wherein determining, by the processor, the positioning result according to the first resource and the related information of the third reference point specifically comprises at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface, and the related information of the first reference point corresponding to the measurement value.

46. The first device according to claim 45, wherein the related information of the third reference point comprises second position information and/or second identification information of the third reference point.

47. The first device according to claim 43, wherein the processor is further configured to perform the following operations:
performing measurement on the first resource to obtain a measurement value, and sending the measurement value and the related information of the third reference point to a third device;
performing measurement on the first resource to obtain the measurement value, and sending the measurement value, related information of a first reference point corresponding to the measurement value, and the related information of the third reference point to the third device.

48. The first device according to claim 47, wherein the processor is further configured to perform the following operations:
sending information of a Uu interface to the third device;
sending the related information of the first reference point corresponding to the measurement value to the third device.

49. A second device, **characterized by** comprising a memory, a transceiver and a processor;
wherein the memory is configured to store a computer program; the transceiver is configured to transmit and receive data under control of the processor; the processor is configured to read the computer program in the memory and perform the following operation:
sending a first resource and related information of a third reference point corresponding to the first resource.

50. The second device according to claim 49, wherein the third reference point comprises at least one of a reference point RP of the second device, an antenna panel center of the second device, an antenna reference point ARP of the second device, or an antenna phase center APC of the second device.

51. The second device according to claim 50, wherein the related information of the third reference point comprises second position information and/or second identification information of the third reference point, and the second position information is second absolute position information or second relative position information.

52. The second device according to claim 51, wherein the second relative position information is position information of the third reference point relative to a fourth reference point of the second device;
wherein the fourth reference point comprises one of the following: a datum point on the second device, a second reference point RP of the second device, a reference antenna panel center of the second device, a second antenna reference point ARP of the second device, or a reference antenna phase center APC of the second device;
wherein the datum point is any point on the second device.

53. The second device according to any one of claims 49-52, wherein sending, by the processor, the first resource and the related information of the third reference point corresponding to the first resource specifically comprises one of the following:
sending the first resource and the related information of the third reference point to a first device; or
sending the first resource to the first device and sending the related information of the third reference point to a third device.

54. A communication apparatus, **characterized by** comprising a memory, a transceiver and a processor;
wherein the memory is configured to store a computer program; the transceiver is configured to transmit and receive data under control of the processor; the processor is configured to read the computer program in the memory and perform the following operations:
receiving a measurement value and related information of a first reference point corresponding to the measurement value that are sent by a first device;
determining a positioning result according to the measurement value and the related information of the first reference point.

55. The communication apparatus according to claim 54, wherein the processor is further configured to perform the following operation:
receiving information of a Uu interface sent by the first device;
wherein determining the positioning result according to the measurement value and the related information of the first reference point comprises: determining the positioning result according to the measurement value, the related information of the first reference point, and the information of the Uu interface.

56. The communication apparatus according to claim 55, wherein determining, by the processor, the positioning result according to the measurement value and the related information of the first reference point specifically comprises:
determining the positioning result according to the measurement value, the related information of the first reference point, and related information of a third reference point corresponding to a first resource used to determine the measurement value.

57. The communication apparatus according to claim 54, wherein the communication apparatus is applied to a third device, and the processor is further configured to perform the following operation:
receiving related information of a third reference point corresponding to a first resource used to determine the measurement value, wherein the related information of the third reference point is sent by the first device or a second device;
wherein determining the positioning result according to the measurement value and the related information of the first reference point comprises: determining the positioning result according to the measurement value, the related information of the first reference point, and the related information of the third reference point.

58. The communication apparatus according to claim 57, wherein the processor is further configured to perform the following operation:
sending positioning assistance information to the first device, wherein the positioning assistance information is used to determine the measurement value.

59. The communication apparatus according to claim 58, wherein the positioning assistance information comprises at least one of an expected angle between a reference point in the first device and a reference point in the second device, an expected delay between the reference point in the first device and the reference point in the second device, an uncertainty range of the expected angle, or an uncertainty range of the expected delay.

60. A communication apparatus, **characterized in that** the apparatus is applied to a first device, and the apparatus comprises:
a receiving unit, configured to receive a first resource sent by a second device;
a measurement unit, configured to perform measurement on the first resource to obtain a measurement value;
a sending unit, configured to send the measurement value and related information of a first reference point corresponding to the measurement value to the second device or a third device.

61. The apparatus according to claim 60, wherein the related information of the first reference point comprises first position information and/or first identification information of the first reference point.

62. The apparatus according to claim 61, wherein the first position information is first absolute position information or first relative position information.

63. The apparatus according to claim 61, wherein the first reference point comprises at least one of a reference point RP of the first device, an antenna panel center of the first device, an antenna reference point ARP of the first device, or an antenna phase center APC of the first device.

64. The apparatus according to claim 62, wherein the first relative position information is position information of the first reference point relative to a second reference point of the first device;
wherein the second reference point comprises one of the following: a datum point on the first device, a first reference point RP of the first device, a reference antenna panel center of the first device, a first antenna reference point ARP of the first device, or a reference antenna phase center APC of the first device;
wherein the datum point is any point on the first device.

65. The apparatus according to any one of claims 60-64, wherein the receiving unit is further configured to receive positioning assistance information sent by the third device, wherein the positioning assistance information is used to determine the measurement value.

66. The apparatus according to claim 65, wherein the positioning assistance information comprises at least one of an expected angle between a reference point in the first device and a reference point in the second device, an expected delay between the reference point in the first device and the reference point in the second device, an uncertainty range of the expected angle, or an uncertainty range of the expected delay.

67. The apparatus according to any one of claims 60-66, wherein the measurement value is a differential measurement value or an absolute measurement value.

68. The apparatus according to claim 67, wherein the differential measurement value is determined based on one of the following differential forms:
a differential form on different first reference points for a same first resource; or
a differential form on different first resources for a same first reference point.

69. The apparatus according to any one of claims 60-68, wherein the measurement value comprises an angle measurement value, and the angle measurement value is a measurement value in a global coordinate system or a measurement value in a local coordinate system.

70. The apparatus according to any one of claims 60-69, wherein the receiving unit is further configured to receive related information of a third reference point corresponding to the first resource that is sent by the second device;
the sending unit is further configured to send the related information of the third reference point to the third device.

71. The apparatus according to any one of claims 60-70, wherein the sending unit is further configured to send obtained information of a Uu interface to the third device or the second device.

72. A communication apparatus, **characterized in that** the apparatus is applied to a first device, and the apparatus comprises:
a receiving unit, configured to receive a first resource and related information of a third reference point corresponding to the first resource that are sent by a second device.

73. The apparatus according to claim 72, wherein the apparatus further comprises:
a determination unit, configured to determine a positioning result according to the first resource and the related information of the third reference point.

74. The apparatus according to claim 73, wherein the determination unit is configured to perform at least one of the following:
performing measurement on the first resource to obtain a measurement value, and determining the positioning result according to the measurement value and the related information of the third reference point;
performing measurement on the first resource to obtain the measurement value, and determining the positioning result according to the measurement value, the related information of the third reference point, and related information of a first reference point corresponding to the measurement value;
performing measurement on the first resource to obtain the measurement value, and determining the positioning result according to the measurement value, the related information of the third reference point, and information of a Uu interface; or
performing measurement on the first resource to obtain the measurement value, and determining the positioning result according to the measurement value, the related information of the third reference point, the information of the Uu interface, and the related information of the first reference point corresponding to the measurement value.

75. The apparatus according to claim 74, wherein the related information of the third reference point comprises second position information and/or second identification information of the third reference point.

76. The apparatus according to claim 72, wherein the apparatus further comprises a processing unit, and the processing unit is configured to perform one of the following:
performing measurement on the first resource to obtain a measurement value, and sending the measurement value and the related information of the third reference point to a third device; or
performing measurement on the first resource to obtain the measurement value, and sending the measurement value, related information of a first reference point corresponding to the measurement value, and the related information of the third reference point to the third device.

77. The apparatus according to claim 76, wherein the apparatus further comprises a sending unit, and the sending unit is configured to perform at least one of the following:
sending information of a Uu interface to the third device; or
sending the related information of the first reference point corresponding to the measurement value to the third device.

78. A communication apparatus, **characterized in that** the apparatus is applied to a second device, and the apparatus comprises:
a sending unit, configured to send a first resource and related information of a third reference point corresponding to the first resource.

79. The apparatus according to claim 78, wherein the third reference point comprises at least one of a reference point RP of the second device, an antenna panel center of the second device, an antenna reference point ARP of the second device, or an antenna phase center APC of the second device.

80. The apparatus according to claim 79, wherein the related information of the third reference point comprises second position information and/or second identification information of the third reference point, and the second position information is second absolute position information or second relative position information.

81. The apparatus according to claim 80, wherein the second relative position information is position information of the third reference point relative to a fourth reference point of the second device;
wherein the fourth reference point comprises one of the following: a datum point on the second device, a second reference point RP of the second device, a reference antenna panel center of the second device, a second antenna reference point ARP of the second device, or a reference antenna phase center APC of the second device;
wherein the datum point is any point on the second device.

82. The apparatus according to any one of claims 78-81, wherein the sending unit is configured to perform one of the following:
sending the first resource and the related information of the third reference point to a first device; or
sending the first resource to the first device and sending the related information of the third reference point to a third device.

83. A communication apparatus, **characterized by** comprising:
a receiving unit, configured to receive a measurement value and related information of a first reference point corresponding to the measurement value that are sent by a first device;
a determination unit, configured to determine a positioning result according to the measurement value and the related information of the first reference point.

84. The apparatus according to claim 83, wherein the receiving unit is further configured to receive information of a Uu interface sent by the first device;
wherein determining the positioning result according to the measurement value and the related information of the first reference point comprises: determining the positioning result according to the measurement value, the related information of the first reference point, and the information of the Uu interface.

85. The apparatus according to claim 84, wherein the determination unit is configured to determine the positioning result according to the measurement value, the related information of the first reference point, and related information of a third reference point corresponding to a first resource used to determine the measurement value.

86. The apparatus according to claim 83, wherein the apparatus is applied to a third device, and the receiving unit is further configured to receive related information of a third reference point corresponding to a first resource used to determine the measurement value, wherein the related information of the third reference point is sent by the first device or a second device;
the determination unit is specifically configured to determine the positioning result according to the measurement value, the related information of the first reference point, and the related information of the third reference point.

87. The apparatus according to claim 86, wherein the sending unit is further configured to send positioning assistance information to the first device, wherein the positioning assistance information is used to determine the measurement value.

88. The apparatus according to claim 87, wherein the positioning assistance information comprises at least one of an expected angle between a reference point in the first device and a reference point in the second device, an expected delay between the reference point in the first device and the reference point in the second device, an uncertainty range of the expected angle, or an uncertainty range of the expected delay.

89. A processor-readable storage medium, **characterized in that** the processor-readable storage medium stores a computer program, and the computer program is used to cause the processor to perform the method according to any one of claims 1-12.

90. A processor-readable storage medium, **characterized in that** the processor-readable storage medium stores a computer program, and the computer program is used to cause the processor to perform the method according to any one of claims 13-18.

91. A processor-readable storage medium, **characterized in that** the processor-readable storage medium stores a computer program, and the computer program is used to cause the processor to perform the method according to any one of claims 19-23.

92. A processor-readable storage medium, **characterized in that** the processor-readable storage medium stores a computer program, and the computer program is used to cause the processor to perform the method according to any one of claims 24-29.
